# EUROPÄISCHE PATENTANMELDUNG

(11) **EP 2 565 830 A1**
(43) Veröffentlichungstag der Anmeldung: **06.03.2013**
(21) Anmeldenummer: 11179789.0
(22) Anmeldetag: 01.09.2011
(51) Int. Cl.: G06Q 10/00

(54) **Verfahren zur Erstellung und Aktualisierung sowie Konfiguration von diskreten Simulationsmodellen**

(71) Anmelder: Celonis GmbH, 85659 Forstern (DE)
(72) Erfinder: Klenk, Martin, 80798 München (DE); Rinke, Alexander, 80799 München (DE)
(74) Vertreter: Bettinger Schneider Schramm

(57) **Zusammenfassung**

Bereitgestellt werden ein Computer-implementiertes Verfahren sowie eine Datenverarbeitungseinrichtung zum Erstellen, Konfigurieren und Aktualisieren eines Simulationsmodells, insbesondere eines diskreten Simulationsmodells, für ein zu simulierendes System, wobei das Simulationsmodell zumindest ein Arbeitselement (Workitem) und zumindest ein Bearbeitungselement (Workcenter), welches das zumindest eine Arbeitselement verarbeitet, umfasst, wobei das Verfahren zumindest umfasst:
- Entgegennehmen von Daten, welche eine Anzahl von Eigenschaften des zu simulierenden Systems beschreiben;
- Ermitteln eines Workflow-Graphen, welcher die Elemente eines statischen Simulationsmodells beschreibt; und
- Konfigurieren der Elemente des statischen Simulationsmodells, wobei das Konfigurieren ein Ermitteln von empirischen Verteilungen der Daten umfasst.

## Beschreibung

### Gebiet der Erfindung

Die Erfindung betrifft ein Verfahren zur Erstellung und Aktualisierung von diskreten Simulationsmodellen sowie deren Konfiguration. Die Erfindung umfasst ein Verfahren zur Bestimmung eines statischen Simulationsmodells auf Basis von Datenauszügen, etwa aus einem oder mehreren Workflow Management Systemen. Weiterhin umfasst die Erfindung ein Verfahren zur Konfiguration des Verhaltens der Elemente einer Simulation auf Basis von Datenauszügen, etwa aus einem oder mehreren Workflow Management Systemen. Durch die Kombination dieser beiden Verfahren wird das erfindungsgemäße Verfahren zur Erstellung und Aktualisierung eines diskreten Simulationsmodells umgesetzt.

### Stand der Technik

Im Stand der Technik sind Simulationen allgemein bekannt. Gemäß der VDE-Richtlinie DIN 3633 wird darunter ein Verfahren zur Nachbildung - das bedeutet Modellbildung - eines realen oder gedachten Systems mit seinen internen dynamischen Prozessen in Form eines experimentierbaren Modells verstanden, um zu Erkenntnissen zu gelangen, die auf die Realität übertragbar sind. Im weiteren Sinne versteht man unter Simulation auch das Vorbereiten, Durchführen und die Auswertung von Simulations-Experimenten mit einem Simulationsmodell. Dabei unternimmt ein Simulationsmodell den Versuch, die komplexe Wirklichkeit anschaulich und verständlich darzustellen. Ein solches Modell stellt also eine Abstraktion und Beschreibung der realen Welt, bzw. eines Teils davon dar, wobei oftmals nicht alle Aspekte der analysierten Situation abgebildet werden können.

Aus dem Stand der Technik sind diskrete Simulationsmodelle als ein häufig verwendetes Verfahren zur Simulation von Systemen und Arbeitsabläufen bekannt. Bei einer diskreten Simulation wird ein Systemablauf in einzelne, diskrete Schritte zerlegt. Der Ausführungszeitpunkt und die Dauer dieser Schritte werden dabei durch statistisch bestimmte Zeitintervalle definiert. Bei der Ausführung der Simulation werden diese Schritte dann nacheinander ausgeführt und jeder Schritt bestimmt jeweils den nächsten Systemzustand.

Diskrete Simulationsmodelle werden in verschiedenen Bereichen eingesetzt um komplexe Vorhaben, etwa Fabrikanlagen oder Flughäfen zu planen, analysieren und optimieren. Die Struktur solcher Simulationsmodelle und die Informationen zur dynamischen Konfigurationen der Simulationsmodelle werden nach dem Stand der Technik durch manuelle Datenerhebung und -auswertung konfiguriert (beispielsweise durch die Schätzung von parametrischen Verteilungen). Dies führt bereits bei überschaubaren Systemen zu einem hohen Arbeitsaufwand zur detailgetreuen Abbildung des Systems, Ungenauigkeiten in Bezug auf das abgebildete System sowie mangelnder Aktualität. Im Falle von Änderungen des abzubildenden Verhaltens, müssen eine Vielzahl von Parameter neu geschätzt werden, um das Simulationsmodell und seine Konfiguration zu aktualisieren.

Ebenfalls sind Workflow Management Systeme aus dem Stand der Technik bekannt. Ein Workflow Management Systeme ermöglicht die Computer-gestützte, semi-automatisierte Ausführung von Standardvorgängen zwischen Mitarbeitern, Abteilungen und Hierarchien. Dabei werden die Tätigkeiten der Mitarbeiter sowohl durch das System technisch unterstützt als auch elektronisch aufgezeichnet. Dokumente werden hierzu in Daten und in elektronische Formulare umgewandelt, sowie komplexe Arbeitsschritte automatisiert. Das Resultat ist eine prozessorientierte, strukturierte, elektronische Vorgangsbearbeitung, die Fehlerquellen eliminiert und Unternehmensvorgänge für alle Beteiligten transparent abbildet. Ziel eines Workflow Management Systems ist ein automatisierter Informationsfluss zur vereinfachten Weitergabe, Bearbeitung und Abschluss von Arbeitsabläufen. Workflow Management Systeme verkürzen die Zeit zwischen den einzelnen Schritten eines Vorgangs, indem die Weiterleitung der erforderlichen Informationen an die zuständige Person optimiert wird.

Bei dem Aufbau diskreter Simulationsmodelle ergeben sich insbesondere die folgenden Herausforderungen bzw. Probleme:
- Aufstellung des statischen Simulationsmodells,
- Konfiguration der Modellelemente, und
- Aktualisierung der vorstehend genannten Teile der Simulation bei Veränderungen des simulierten Systems (beispielsweise Erweiterung eines Flughafens um ein weiteres Terminal).

Ein statisches Simulationsmodell umfasst die im simulierten System aktiven Elemente und die Verbindungen zwischen diesen. In einer Fabrik können dies beispielsweise die einzelnen Gerätschaften bzw. Maschinen sein, die im Rahmen eines Produktionsprozesses von einem Werkstück durchlaufen werden. Ein statisches Simulationsmodell umfasst daher die folgenden Arten von Elementen:
- Workitems (beispielsweise die verschiedenen Produkte die in einer Fabrik gefertigt werden können),
- Workcenter, welche die Workitems verarbeiten und ggfs. in neue Workitems transformieren (beispielsweise eine Maschine die ein Werkstück für den Versand vorbereitet oder ein Werkstück mit einer Schutzschicht versieht),
- Warteschlangen (nehmen Workitems auf, die auf die Folgeverarbeitung durch andere Modellelemente, z.B. Workcenter, warten),
- Verbindungen zwischen den Workcentern (beispielsweise die Verknüpfung eines Workcenters, das den Versand vorbereitet, mit dem Workcenter, welches den Versand durchführt),
- Generatoren (erzeugen nach einem vordefinierten Muster neue Workflows),
- Senken (Workflows die in eine Senke geleitet werden, werden aus der Simulation entfernt).

Ein Problem stellt insbesondere die Konfiguration der Elemente des statischen Simulationsmodells dar, damit diese sich gemäß dem zu simulierenden System verhalten. Am Beispiel eines Flughafens müsste etwa für das Workcenter "Gepäckschalter" die Information konfiguriert werden, wie lange es für die Bearbeitung von Gepäckstücken benötigt (beispielsweise könnte diese mit einem Mittelwert von 5 Minuten und einer Standardabweichung von 1 Minute normalverteilt sein). Im Wesentlichen werden dabei die folgenden Konfigurationsinformationen benötigt:
- Bearbeitungszeiten,
- Weiterleitungshäufigkeiten,
- Zwischenankunftszeiten,
- Prozentuale Verteilungen der von Generatoren erzeugten Workitems (und deren Eigenschaften), und / oder
- Schichtpläne.

Ein gängiger Ansatz für die Konfiguration der Simulationselemente ist die manuelle Schätzung statistischer Verteilungen auf Basis von stichprobenartigen Untersuchungen.

Dieser Ansatz weist allerdings mehrere Nachteile auf. In der Praxis sind dies die Ungenauigkeit, der große Arbeitsaufwand bei einer detailgetreuen Abbildung des Systems sowie die mangelnde Aktualität. Diese Probleme sind der Grund, warum sich der Einsatz von Simulationen in vielen Bereichen bisher nicht gelohnt hat.

Ein Wesentlicher Nachteil des aus dem Stand der Technik bekannten Verfahrens ist, dass die Simulationsmodelle auf im Wesentlichen historischen, d.h., auf nicht aktuellen Daten basieren, sodass die Simulationsmodelle bereits zum Zeitpunkt der erstmaligen Ausführung nicht dem aktuellen Status des zu simulierenden Systems entsprechen, bzw. das zu simulierende System nicht korrekt abbilden. Ändert sich etwa das Beschichtungsverfahren zum Beschichten von metallischen Werkstücken, weil zukünftig zwei Schichten anstelle einer Schicht auf das Werkstück aufgetragen werden sollen, kann das Simulationsmodell, welches das Auftragen einer Schicht berücksichtigt, zwar ein korrektes Ergebnis liefern, diese Ergebnis bildet dann allerdings nicht das aktuelle Beschichtungsverfahren ab.

Ein weiterer Nachteil ist darin zu sehen, dass die für die Erzeugung eines Simulationsmodells erforderlichen Daten bzw. Messdaten häufig nicht zentral verfügbar sind, etwa wenn unterschiedliche, ggf. geographisch verteilte Workcenter an dem zu simulierenden System beteiligt sind.

### Aufgabe der Erfindung

Aufgabe der Erfindung ist es daher, ein Verfahren und ein System zur Erstellung und Aktualisierung von Simulationsmodellen bereitzustellen, welche die vorstehend genannten und weitere aus dem Stand der Technik bekannte Nachteile vermeiden, und welche insbesondere gewährleisten, dass die Simulationsmodelle das zu simulierende System jederzeit korrekt abbilden.

### Erfindungsgemäße Lösung

Diese Aufgabe wird erfindungsgemäß durch ein Verfahren zur Erstellung, Aktualisierung und Konfiguration von diskreten Simulationsmodellen sowie durch ein System zur Datenübertragung und -verarbeitung, welche ausgestaltet sind, das erfindungsgemäße Verfahren auszuführen, nach den unabhängigen Ansprüchen gelöst. Vorteilhafte Ausgestaltungen und Weiterbildungen der Erfindung sind in den jeweiligen abhängigen Ansprüchen angegeben.

Bereitgestellt wird demnach ein Computer-implementiertes Verfahren zum Erstellen, Konfigurieren und Aktualisieren eines Simulationsmodells, insbesondere eines diskreten Simulationsmodells, für ein zu simulierendes System in einer Datenverarbeitungsanlage, wobei das Simulationsmodell zumindest ein Arbeitselement (Workitem) und zumindest ein Bearbeitungselement (Workcenter), welches das zumindest eine Arbeitselement verarbeitet, umfasst, wobei das Verfahren zumindest umfasst:
- Entgegennehmen von Daten, welche eine Anzahl von Eigenschaften des zu simulierenden Systems beschreiben;
- Ermitteln eines Workflow-Graphen, welcher die Elemente eines statischen Simulationsmodells beschreibt; und
- Konfigurieren der Elemente des statischen Simulationsmodells, wobei das Konfigurieren ein Ermitteln von empirischen Verteilungen der Daten umfasst.

Die vorliegende Erfindung nutzt nun erstmals die Tatsache, dass in vielen Bereichen umfangreiche Daten über die Arbeitsabläufe des Systems in Workflow Management Systemen (oder andere Quellsysteme) aufgezeichnet werden und ermöglicht es, Simulationsmodelle dynamisch und realitätsgetreu auf Basis der Live-Daten aus diesen Quellsystemen zu konfigurieren. So lässt sich eine Simulation praktisch ohne den sonst notwendigen manuellen Aufwand (Interviews, Stichproben, etc.) durchführen und ist gleichzeitig immer aktuell und deutlich genauer als herkömmliche Simulationsmodelle. Ein besonderer Vorteil der vorliegenden Erfindung besteht darin, dass sie eine schnellere, kostengünstigere, häufigere und wesentlich genauere Simulation ermöglicht.

Ferner ermöglichen es die empirischen Verteilungen, dass eine realistische und besonders robuste Konfiguration der Modellelemente erreicht wird. Die Simulationen werden unter anderem wesentlich realistischer dadurch, dass der verringerte Konfigurationsaufwand eine detaillierte Abbildung des zu simulierenden Systems ermöglicht (es können daher beispielsweise mehr unterschiedliche Verteilungen zur Konfiguration auf Stundenbasis anstatt auf Tagesbasis, wie beispielsweise in herkömmlichen Verfahren üblich, konfiguriert werden). Weiterhin ist es möglich, dass volle Potential der aufgezeichneten Daten auszuschöpfen um das System möglichst realistisch zu simulieren, da keine Beschränkung auf verkürzte Auszüge/Messungen notwendig ist.

Grundlage für die Ausführung des Verfahrens ist das Entgegennehmen bzw. auslesen der von den Quellsystemen bereitgestellten Daten, welche das Verhalten im zu simulierenden System abbilden. Idealerweise geschieht die Anbindung in Echtzeit (beispielsweise durch direkten Zugriff auf die Datenbanken bzw. Schnittstellen dieser Systeme). Zur Übertragung der Daten aus den Quellsystemen in die Datenverarbeitungsanlage, auf der das erfindungsgemäße Verfahren ausgeführt wird, kann ein Netzwerk zur Datenübertragung verwendet werden oder das Verfahren kann auf dem gleichen System ausgeführt werden. Alternativ zur Anbindung in Echtzeit kann auch ein regelmäßiger Export dieser Ablaufdaten genutzt werden und diese entweder per Netzwerk oder manuell übertragen werden. Es können dabei entweder alle verfügbaren Daten exportiert werden oder diese auf Basis von inhaltlichen sowie zeitlichen Kriterien vorselektiert werden.

Das Ermitteln des Workflow-Graphen kann umfassen:
- Erzeugen des Workflow-Graphen durch Auswerten der (entgegengenommenen) Daten, oder
- Laden eines bereits bestehenden Workflow-Graphen,

Es hat sich als vorteilhaft herausgestellt, wenn die empirischen Verteilungen der Daten mittels einer Kerndichteschätzung extrapoliert werden. Insbesondere wir es dadurch möglich auch eine Simulation zu ermöglichen, wenn nur eine geringe Anzahl von Datenpunkten zur Konfiguration eines Modellelements zur Verfügung steht.

Versuche haben gezeigt, dass es vorteilhaft ist, wenn die Kerndichteschätzung eine zweistufige Kerndichteschätzung umfasst, wobei
- in einem ersten Schritt eine Kerndichteschätzung mit einer globalen Bandbreite, und
- in einem zweiten Schritt Kerndichteschätzungen mit zumindest einer lokalen Bandbreite
durchgeführt werden, wobei die zumindest eine lokale Bandbreite in dem zweiten Schritt in Abhängigkeit von der Verteilungsfunktion der Kerndichteschätzung in dem ersten Schritt gewählt wird.

Die zweistufige Kerndichteschätzung ist besonders vorteilhaft, weil es die automatisierte Erstellung sehr robuster und realistischer Simulationsmodelle ermöglicht. Im Gegensatz zum Stand der Technik, der Schätzung parametrischer Verteilungen, hat es insbesondere die folgenden Vorteile:
- Vollautomatisch anwendbar: Die zweistufige Kerndichteschätzung funktioniert vollautomatisch und führt stets zu einem Ergebnis.
- Für beliebige Datenarten anwendbar: Die zweistufige Kerndichteschätzung ist deutlich flexibler als die Verteilungsschätzung, bei der bereits vor der Schätzung die möglichen Ausgänge beschränkt sind (durch die Wahl der Verteilungsklassen). Dies ermöglicht es, ein Verfahren für alle Datenklassen zu verwenden, was in der Praxis enorm hilfreich ist.
- Geringe Berechnungskomplexität: Die zweistufige Kerndichteschätzung ist mit geringem Berechnungsaufwand ausführbar (im Gegensatz zu anderen Ansätzen, wie beispielsweise multi-dimensionalen Optimierungsproblemen, wie sie für die Parameterschätzung von Mischverteilungen zu berechnen sind).

Bei Vorliegen einer sehr großen Datenbasis kann alternativ der Schritt der Extrapolation der empirischen Verteilungen für einzelne oder alle Verteilungen übersprungen werden.

Vor dem Erzeugen des Simulationsmodells können die Daten aufbereitet werden, wobei das Aufbereiten der Daten zumindest eines aus Beheben von Datenfehlern und Abbilden der Daten auf ein vorbestimmtes Datenformat umfasst, und wobei die entgegengenommenen Daten kryptographisch verschlüsselt und/oder anonymisiert sind.

Idealerweise wird dabei die gesamte Kommunikation über das Netzwerk verschlüsselt und die Daten vor der Übertragung durch Anonymisierung um alle personenbezogenen Daten bereinigt. Zur Erzielung der anonymisierten Übertragung kann ein Teil dieses Verfahrens (alternativ auch die Extraktion und Aufbereitung) auf einem den Quellsystemen nachgelagerten Systemen, welches über eine direkte lokale Netzwerkverbindung verfügt, ausgeführt werden.

Diese Trennung ist vorteilhaft, da dadurch Datenzugriff und Datenverarbeitung zur Begegnung von Datenschutzbedenken getrennt werden können und keine personenbezogenen Daten unverschlüsselt übertragen werden beziehungsweise bereits vor der Übertragung anonymisiert werden. Weiterhin ermöglicht dies eine skalierbare Architektur, da die auszuführenden Operationen über verschiedene Datenverarbeitungsanlagen verteilt werden können.

Die empirischen Verteilungen der Daten können vor dem Konfigurieren der Elemente des Simulationsmodells aufbereitet und / oder angepasst und / oder verändert werden.

Vor dem Entgegennehmen der Daten, können die Daten aufgezeichnet werden und in einer Speichereinrichtung, vorzugesweise eine Datenbank, gespeichert werden, wobei die Speichereinrichtung operativ mit der Datenverarbeitungsanlage, vorzugsweise über ein Kommunikationsnetzwerk, koppelbar ist.

In dem vorstehend genannten Speicherformat werden alle Aktionen, die von den Quellsystemen aufgezeichnet werden, mit den verfügbaren Informationen zur Beschreibung der Aktion gespeichert. Falls nicht alle benötigten Daten zur Simulation aus den Quellsystemen ausgelesen werden können, so können sie in diesem Schritt mit Daten aus weiteren Datenquellen angereichert werden.

Das Erzeugen des Workflow-Graphen bzw. das Auswerten der Daten zum Erzeugen des Workflow-Graphen kann umfassen:
- Zusammenfassen der entgegengenommenen und vorzugsweise in ein vorbestimmtes Datenformat überführten Daten, wobei die zusammengefassten Daten eine Anzahl von Datenelemente umfasst, welche jeweils einen Arbeitsschritt des zu simulierenden System beschreiben;
- für jedes Datenelement, überprüfen, ob das Datenelement bereits in dem Workflow-Graphen enthalten ist, und, sofern das Datenelement in dem Workflow-Graphen nicht enthalten ist, erzeugen von dem Datenelement entsprechenden Modellelemente und einfügen der Modellelemente in den Workflow-Graphen.

Das Auslesen und die Aufbereitung der Daten wird idealerweise jedes Mal wenn neue Daten verfügbar sind ausgeführt. Im Falle eines direkten Datenbankzugriffs zum Beispiel vor jeder Ausführung der Simulation. Andernfalls kann das Auslesen und die Aufbereitung zeitgesteuert ausgeführt werden (beispielsweise einmal täglich nachts, nachdem ein neuer Datenauszug zur Verfügung gestellt wurde).

Bei der Ermittlung bzw. Erstellung des Workflow-Graphen kann beispielsweise wie folgt vorgegangen werden:
1. Beginne mit dem ersten Eintrag in den zusammengefassten Ablaufdaten (erster aufgezeichneter Arbeitsschritt eines Quellsystems).
2. Überprüfe, ob der Arbeitsschritt im Workflow-Graphen schon berücksichtigt wurde, also ob beteiligte Workcenter und Verbindungen bestehen.
   a) Wenn ja, gehe weiter zum nächsten Eintrag.
   b) Wenn nein, lege die entsprechenden Modellelemente an und gehe dann weiter zum nächsten Eintrag.

Die Ermittlung des Workflow-Graphen kann entweder voll automatisch auf Basis der verwendeten Daten erfolgen (in diesem Fall konfiguriert sich das Verfahren selbst auf Basis der Eigenschaften der aufgezeichneten Daten). Alternativ kann eine fest vorgegebene Konfiguration (insb. der Überdeckungsgrad der in den Ablaufdaten gespeicherten Workflowinstanzen, zur Spezifikation des gewünschten Abstraktionsgrades des Workflow-Graphen) verwendet werden.

Die vollautomatische Ermittlung des Workflow-Graphens hat den Vorteil, dass keine Aufwände oder nur sehr geringe Aufwände zur Bestimmung des statischen Simulationsmodells anfallen. Zusätzlich ist das statische Simulationsmodell immer aktuell und sehr schnell verfügbar.

Im Rahmen der Ermittlung des Workflow-Graphen wird auch bestimmt welche Workitems in den verschiedenen Bereichen des Workflow-Graphen verarbeitet und weitergeleitet werden. Alternativ kann auch auf die Unterscheidung der verschiedenen Workitems verzichtet werden und ein Workflow mit nur einem Einheits-Workitem verarbeitet werden.

Nach dem Erzeugen des Workflow-Graphen kann dieser gemäß einer Anzahl vorbestimmter Regeln angepasst werden.

Mögliche Anpassungen sind dabei Erweiterung um zusätzliche Organisationseinheiten sowie Verbindungen oder die Aggregation von Organisationseinheiten. Der Workflow Graph definiert damit alle Elemente des statische Simulationsmodell mit Ausnahme der Workitems. Diese können durch eine separate Auswertung der zusammengefassten Ablaufdaten ermittelt werden, um das statische Simulationsmodell zu vervollständigen.

Ferner kann ein Aktualisieren des ermittelten Workflow-Graphen durchgeführt werden, wenn die entgegengenommenen Daten eine Änderung des zu simulierenden Systems signalisieren.

Die Daten können Sensordaten umfassen, welche von dem zu simulierenden System bereitgestellt werden.

Falls nicht nur das in den Quellsystemen aufgezeichnete Verhalten simuliert werden soll, so wird der Schritt zum Erzeugen der empirischen Verteilungen mit einer Manipulation dieser kombiniert bzw. schließt sich daran an. Hierbei werden auf Basis von vorab festgelegten Operationen die Verteilungen modifiziert. Grundsätzlich können dabei die folgenden Manipulationsarten unterschieden werden:
- Prozentuale Erhöhung/Senken von Bearbeitungszeiten und Zwischenankunftszeiten;
- Absolute Erhöhung/Senken von Bearbeitungszeiten und Zwischenankunftszeiten;
- Entfernung von Bearbeitungszeiten/Zwischenankunftszeiten die bestimmte Schwellwerte über- oder unterschreiten;
- Relative Erhöhung/Senkung von Weiterleitungshäufigkeiten oder der prozentualen Verteilung der Workitems; und / oder
- Veränderungen der Schichtpläne.

Grundsätzlich kann jede beliebige Rechenoperation auf die Listen mit den Werten der jeweiligen empirischen Verteilungen angewandt werden, jedoch muss beachtet werden, dass deren Integrität aufrechterhalten wird. So müssen Zwischenankunftszeiten stets echt größer 0 sein und die Elemente von Weiterleitungsverteiltungen sowie Verteilungen von Workitems sich stets zu 100% aufsummieren.

Manipulationsoperationen können dabei auf die gesamte Konfiguration der Modellelemente angewendet werden oder auf Basis der inhaltlichen und zeitlichen Eigenschaften der Ablaufdaten sowie der betroffenen Elemente des statischen Simulationsmodell auf bestimmte Bereiche eingeschränkt werden.

Alternativ zur automatischen Konfiguration können einzelne Modellelemente auch statisch vorkonfiguriert werden (beispielsweise feste Verwendung einer Normalverteilung mit Erwartungswert 3 und Standardabweichung 5 für die Bearbeitungszeiten eines Workcenters).

Nach dem die empirischen Verteilungen erzeugt wurden, werden mit diesen die Elemente der Simulation konfiguriert. Das Ende des Verfahrens wurde damit erreicht und die Simulation des untersuchten Systems kann als diskrete Simulation auf der Datenverarbeitungsanlage ausgeführt werden.

Durch die Erfindung bereitgestellt wird ferner eine Datenverarbeitungseinrichtung zum Erstellen, Konfigurieren und Aktualisieren eines Simulationsmodells, insbesondere eines diskreten Simulationsmodells, für ein zu simulierendes System, wobei das Simulationsmodell zumindest ein Arbeitselement (Workitem) und zumindest ein Bearbeitungselement (Workcenter), welches das zumindest eine Arbeitselement verarbeitet, umfasst, wobei die Datenverarbeitungseinrichtung angepasst ist:
- Daten, welche eine Anzahl von Eigenschaften des zu simulierenden Systems beschreiben, entgegenzunehmen;
- einen Workflow-Graphen, welcher die Elemente eines statischen Simulationsmodells beschreibt, zu ermitteln, wobei das Ermitteln insbesondere ein Erstellen eines Workflow-Graphen, durch Auswerten der Daten umfasst; und
- die Elemente des statischen Simulationsmodells zu konfigurieren, wobei das Konfigurieren ein Ermitteln von empirischen Verteilungen der Daten umfasst.

Die Datenverarbeitungseinrichtung kann ferner angepasst sein beim Erzeugen des Workflow-Graphen
- entgegengenommene und vorzugsweise in ein vorbestimmtes Datenformat überführte Daten zusammenzufassen, wobei die zusammengefassten Daten eine Anzahl von Datenelemente umfasst, welche jeweils einen Arbeitsschritt des zu simulierenden System beschreiben;
- für jedes Datenelement zu überprüfen, ob das Datenelement bereits in dem Workflow-Graphen enthalten ist, und, sofern das Datenelement in dem Workflow-Graphen nicht enthalten ist, dem Datenelement entsprechenden Modellelemente zu erzeugen und die erzeugten Modellelemente in den Workflow-Graphen einzufügen.

Die Datenverarbeitungseinrichtung kann mit zumindest einer Speichereinrichtung, vorzugesweise eine Datenbank, operativ, vorzugsweise über ein Kommunikationsnetzwerk, koppelbar ist, wobei in der Speichereinrichtung die Daten aufgezeichnet sind, wobei die entgegengenommenen Daten von einer weiteren Datenverarbeitungseinrichtung bereitgestellt und gegebenenfalls aufbereitet werden.

Die Daten können Sensordaten umfassen, welche von dem zu simulierenden System bereitgestellt werden und welche über eine Schnittstelle der Datenverarbeitungseinrichtung zur Verfügung gestellt werden.

Die Daten können ein Änderungssignal umfassen, mit welchem der Datenverarbeitungseinrichtung eine Änderung in dem zu simulierenden Systems signalisierbar ist, wobei die Datenverarbeitungseinrichtung angepasst ist, ein Aktualisieren eines bereits erzeugten Simulationsmodells durchzuführen, wenn das Änderungssignal eine Änderung des zu simulierenden Systems signalisiert.

Die Daten können physikalische Größe, etwa Bearbeitungsdauer eines Workitems in Minuten oder Sekunden, Temperaturen des zu verarbeitenden Workitems, Drücke etc., umfassen.

### Kurzbeschreibung der Figuren

Weitere Einzelheiten und Merkmale der Erfindung ergeben sich aus der nachfolgenden Beschreibung in Verbindung mit der Zeichnung. Es zeigt:
- Fig. 1: ein erfindungsgemäßes System zur Datenübertragung mit zwei Workflow Management Systemen als Quellsysteme (CRM System und Telefonanlage), einer vorgeschalteten Datenverarbeitungsanlage zur Extraktion, Anonymisierung sowie Aufbereitung/Zusammenfassung der für eine Simulation benötigten Daten und einer zweiten Datenverarbeitungsanlage, welche geeignet ist das erfindungsgemäße Verfahren auszuführen;
- Fig. 2: einen Screenshot, der die Anwendung des erfindungsgemäßen Verfahrens und eine grafische Visualisierung mittels einer handelsüblichen Software zur Ausführung von diskreten Simulationsmodellen verdeutlicht;
- Fig. 3: ein Diagramm zur Erläuterung des Prinzips der zweistufigen Kerndichteschätzung zur Extrapolation der empirischen Verteilungen zur Konfiguration der Modellelemente; und
- Fig. 4: ein Ablaufdiagramm des erfindungsgemäßen Verfahrens zur Erstellung und Konfiguration von diskreten Simulationsmodellen.

### Detaillierte Beschreibung der Erfindung

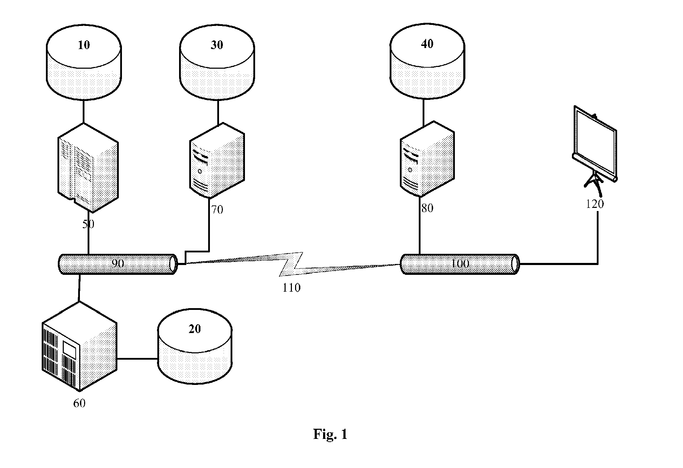

**Fig. 1** zeigt in Form eines Datenflussdiagramms Datenverarbeitungsanlagen, die mittels eines Systems zur Datenübertragung verbunden sind, welche ausgestalte sind, ein diskretes Simulationsmodell nach dem erfindungsgemäßen Verfahren auf Basis der Daten aus den Workflow Management System zu konfigurieren.

Das System umfasst zwei Workflow Management Systeme (etwa ein CRM System 50 und eine Telefonanlage 60), welche über ein lokales Kommunikationsnetzwerk 90 mit einer ersten Datenverarbeitungsanlage 70 gekoppelt sind. eine zweite Datenverarbeitungsanlage 80 befindet sich in diesem Beispiel in einem weiteren Kommunikationsnetzwerk 100. Die beiden Kommunikationsnetzwerke 90, 100 sind miteinander durch eine Verbindung 110, z.B. das Internet, gekoppelt.

Die beiden Workflow Management Systeme 50 und 60 verfügen jeweils über lokal gekoppelte Datenbanken 10 und 20, welche das Verhalten des zu simulierenden Systems in ihren lokal angeschlossenen Speichereinrichtungen aufzeichnen. Diese Datenbanken 10, 20 können sich alternativ auch auf einer anderen Servereinrichtung befinden, welche mit einem Kommunikationsnetzwerk mit den Workflow Management Systemen gekoppelt ist.

Die Workflow Management Systeme 50 und 60 weisen des Weiteren Mittel zur Datenverarbeitung auf, welche dazu vorgesehen sind, der ersten Datenverarbeitungsanlage 70 einen Zugriff auf die jeweilige Datenbank 10, 30 zur Verfügung zu stellen.

Die erste Datenverarbeitungsanlage 70 ist ausgestaltet die Extraktion, Anonymisierung, Aufbereitung und Zusammenfassung der in den Datenbanken 10, 20 der beiden Workflow Management Systemen 50 und 60 gespeicherten Ablaufdaten zu den Workflowinstanzen zu einem einheitlichen, aufbereiten Speicherformat durchzuführen. Diese Ablaufdaten werden in der mit der ersten Datenverarbeitungsanlage 70 gekoppelten Datenbank 30 abgelegt.

Die erste Datenverarbeitungsanlage 70 weist des Weiteren Mittel zur Datenverarbeitung auf, welche dazu vorgesehen sind, der zweiten Datenverarbeitungsanlage 80 einen Zugriff auf die mit der ersten Datenverarbeitungsanlage 70 gekoppelten Datenbank 30 zur Verfügung zu stellen. Diese Datenbank 30 kann sich alternativ auch auf einer anderen Servereinrichtung befinden, welche mit einem Kommunikationsnetzwerk mit der ersten Datenverarbeitungsanlage 70 gekoppelt ist.

Die zweite Datenverarbeitungsanlage 80 ist ausgestaltet die Ermittlung des Workflow-Graphen, der benötigten Konfigurationsinformationen für die Modellelemente (inkl. Aufschlüsselung auf Basis weiterer Eigenschaften der Workitems), Erstellung und Extrapolation der empirischen Verteilungen sowie ggfs. die Durchführung von Manipulationsoperationen auf den empirischen Verteilungen durchzuführen. Das aus dem Workflow-Graphen abgeleitete statistische Simulationsmodell sowie die ermittelten empirischen Verteilungen zur Konfiguration der Modellelemente werden in der mit der zweiten Datenverarbeitungsanlage 80 gekoppelten Datenbank 40 abgelegt. Diese Datenbank 40 kann sich alternativ auch auf einer anderen Servereinrichtung befinden, welche mit einem Kommunikationsnetzwerk mit der zweiten Datenverarbeitungsanlage 80 gekoppelt ist.

Die zweite Datenverarbeitungsanlage 80 weist des Weiteren Mittel zur Datenverarbeitung auf, welche dazu vorgesehen sind, einem System 120 zur Ausführung von diskreten Simulationen einen Zugriff auf die mit der zweiten Datenverarbeitungsanlage 80 gekoppelten Datenbank 40 mit dem statistischen Simulationsmodell und den empirischen Verteilungen zur Verfügung zu stellen. Alternativ kann die Simulation auch direkt von der zweiten Datenverarbeitungsanlage 80 ausgeführt werden.

Das System ist dabei so ausgestaltet, dass vor der Ausführung einer neuen Simulation das erfindungsgemäße Verfahren angestoßen wird. Zur Reduktion des übertragenen Datenvolumens und der benötigten Verarbeitungskapazität kann sich das Verfahren dabei auf bestimmte, inhaltlich und zeitlich bestimmte, Ablaufdaten in den als Quellsysteme dienenden Workflow Management Systeme beschränken. Manipulationsoperationen der empirischen Verteilungen können dabei sogar isoliert, ohne dass Anstoßen der vorgelagerten Schritte des Verfahrens, auf Basis der in der Datenbank 40 gespeicherten empirischen Verteilungen ausgeführt werden.

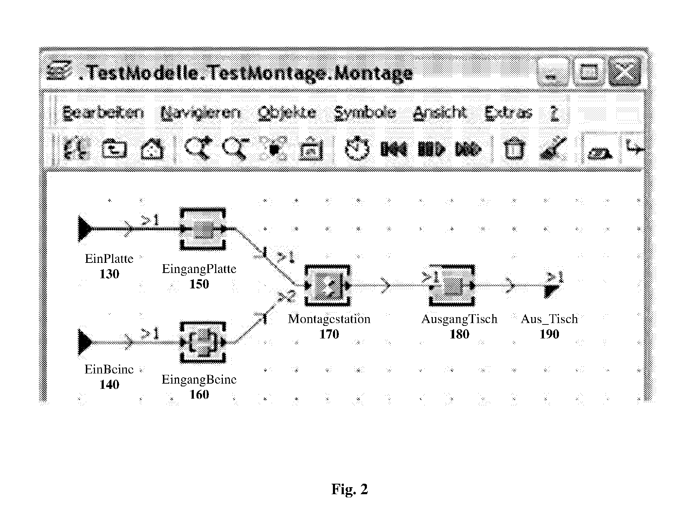

Fig. 2 zeigt einen Screenshot der die Anwendung des erfindungsgemäßen Verfahrens und die grafische Visualisierung mittels einer handelsüblichen Software zur Ausführung von diskreten Simulationsmodellen verdeutlicht.

Das in Fig. 2 dargestellte Simulationsmodell enthält Beispiele für alle Elemente eines Simulationsmodells:
- Workitems (nicht dargestellt, da diese nur während der Animation des Simulationsmodells bei der Ausführung eins Simulationsdurchgangs angezeigt werden): In diesem beispielhaften Simulationsmodell werden drei Workitems verwendet. Die "Tischplatte" und die "Tischbeine" bilden dabei die Vorprodukte ab, die von dem Workcenter "Montagestation" 170 in das Workitem "Tisch" transformiert werden.
- Workcenter: Dieses Simulationsmodell enthält ein Workcenter 170 mit der Bezeichnung "Montagestation".
- Warteschlangen: Es sind drei Warteschlangen mit den Bezeichnungen "EingangPlatte" 150, "EingangBeine" 160 und "AusgangTisch" 180 in diesem Simulationsmodell enthalten. Diese Warteschlangen nehmen die Workitems auf bevor sie von dem Workcenter "Montagestation" 170 verarbeitet werden bzw. nach dieser Verarbeitung bevor sie in die Senke 190 weitergeleitet werden.
- Verbindungen: Die Striche (Pfeile) zwischen den anderen Modellelementen zeigen die in diesem Simulationsmodell konfigurierten Verbindungen auf.
- Generatoren: Es befinden sich zwei dieser Elemente in diesem Beispiel. Diese sind mit "EinBeine" 130 und "EinPlatte" 140 bezeichnet und erzeugen auf Basis der konfigurierten Ankunftsmuster die Vorprodukte "Tischbeine" und "Tischplatte".
- Senken: Das Modell enthält eine Senke 190 mit der Bezeichnung "Aus_Tisch", bei deren erreichen die Workitems aus der Simulation entfernt werden.

Dieses Simulationsmodell bildet einen einfachen Produktionsprozess ab, der dadurch angestoßen wird, dass die beiden Generatoren "EinBeine" 130 und "EinPlatte" 140 die Vorprodukte erzeugen, welche anschließend von dem Workcenter "Montagestation" 170 zu dem Produkt "Tisch" weiterverarbeitet werden. Das Verhalten des Simulationsmodells ist dabei stochastisch, da sowohl die Zwischenankunftszeiten an den beiden Generatoren 130 und 140 als auch die Bearbeitungszeit des Workcenters 170 durch statistische Verteilungen bestimmt werden. Die Bearbeitungszeiten des Workcenters 170 können etwa mittels eines Sensors erfasst werden, welcher die erfassten Bearbeitungszeiten als Sensordaten für das Simulationsmodell zur Verfügung stellt.

Ein Anwender könnte dieses Simulationsmodell beispielsweise nutzen, um das Zusammenspiel der Lieferungen der Vorprodukte und der Verarbeitungskapazität der Montagestation zu untersuchen (beispielsweise zur Vorbereitung einer Just-in-Time Belieferung).

Anhand dieses Beispiels soll nun auch eine Ausgestaltung des erfindungsgemäßen Verfahrens gezeigt werden.

Wie vorstehend beschrieben, ist die Voraussetzung für die Anwendung des erfindungsgemäßen Verfahrens die Verfügbarkeit eines Workflow Management Systems oder eines ähnlichen Systems, welches das zu simulierende Verhalten elektronisch aufzeichnet. Ein derartiges System kann etwa ein System zur Produktionsplanung und -steuerung sein, welches die notwendigen Messdaten über den Produktionsprozess etwa mittels Sensoreinrichtungen erfasst und aufzeichnet. Die erfassten Sensordaten können etwa die Bearbeitungszeit, die Verarbeitungstemperatur, die Schichtdicke einer aufgebrachten Schutzschicht, die Transportzeit zwischen zwei Montagestationen (Workcenter), oder dergleichen sein.

Das System umfasst dabei die Servereinrichtung, auf der die Anwendung zur Produktionsplanung und -steuerung betrieben wird. Diese Servereinrichtung ist über ein lokales Kommunikationsnetzwerk mit der ersten Datenverarbeitungsanlage 70 gekoppelt. Die erste Datenverarbeitungsanlage 70 ist über ein weiteres Kommunikationsnetzwerk 110, beispielsweise das Internet, mit einer zweiten Datenverarbeitungsanlage 80 gekoppelt.

Die Servereinrichtung verfügt über eine Speichereinrichtung, etwa eine Datenbank. Die Speichereinrichtung kann sich alternativ auch auf einer anderen Servereinrichtung befinden, welche mit einem Kommunikationsnetzwerk mit der Servereinrichtung gekoppelt ist.

Die Servereinrichtung weist des Weiteren Mittel zur Datenverarbeitung auf, welche in erster Linie dazu vorgesehen sind, einen Zugriff auf die Speichereinrichtung zur Verfügung zu stellen, so dass die erste Datenverarbeitungsanlage 70 Zugriff auf die gespeicherten Workflow Ablaufdaten hat.

Die erste Datenverarbeitungsanlage 70 nutzt diesen Zugriff auf die Ablaufdaten, um diese zu extrahieren und dann Methoden zur Anonymisierung anzuwenden. Anschließend werden diese aufbereitet und in ein einheitliches Speicherformat überführt. Diese in einem einheitlichen Speicherformat aufbereiteten Ablaufdaten werden anschließend in eine weiteren Speichereinrichtung (z.B. eine Datenbank), welche sich auf der ersten Datenverarbeitungsanlage 1 befinden kann oder welche sich alternativ auf einer weiteren Servereinrichtung befinden kann, die mit der ersten Datenverarbeitungsanlage 70 über ein lokales Kommunikationsnetzwerk gekoppelt ist, übertragen.

Anschließend werden die im einheitlichen Speicherformat aufbereiteten Ablaufdaten verschlüsselt an die zweite Datenverarbeitungsanlage 80 übertragen. Die zweite Datenverarbeitungsanlage 80 verfügt ebenfalls über eine Speichereinrichtung 40 (z.B. eine Datenbank), welche sich auf der Datenverarbeitungsanlage 80 befinden kann oder welche sich alternativ auf einer weiteren Servereinrichtung befinden kann, die mit der zweiten Datenverarbeitungsanlage 80 über ein lokales Kommunikationsnetzwerk gekoppelt ist.

Die zweite Datenverarbeitungsanlage 80 stellt die weiteren Mittel bereit, um die übertragenen, im einheitlichen Speicherformat vorliegenden Ablaufdaten, zur, vorzugsweise automatisierten, Erstellung eines diskreten Simulationsmodells zu verwenden.

Hierzu wird von der zweiten Datenverarbeitungsanlage 80 als erstes der Workflow-Graph bestimmt, welcher aus den in Fig. 2 dargestellten Modellelemente und deren Verbindungen besteht. Dieser Workflow-Graph wird von der zweiten Datenverarbeitungsanlage 80 in der mit dieser gekoppelten Speichereinrichtung 40 abgelegt.

Weil in diesem Beispiel vorab keine Regeln zur Veränderung des WorkflowGraphens definiert wurden, wir dieser Workflow-Graph im Anschluss genutzt, um die benötigten empirischen Verteilungen für die Konfiguration der Modellelemente zu bestimmen. Dies sind in diesem Beispiel:
- Zwischenankunftszeiten der beiden Generatoren 130 und 140, und
- Bearbeitungszeiten des Workcenters 170.

Da keine Verzweigungen in diesem Simulationsmodell enthalten sind, werden keine Weiterleitungshäufigkeiten für die Konfiguration dieses Simulationsmodells benötigt. Ebenso wird kein Schichtplan für die weitere Konfiguration des Workcenters 170 benötigt, da eine vollzeitige Besetzung zu Grunde gelegt wird.

Zur exakteren Anpassung des Verhaltens der Modellelemente können die konfigurierten Verteilungen noch auf Basis der Eigenschaften der simulierten Workitems angepasst werden. Für die Bestimmung nach welchen Eigenschaften eine solche Aufspaltung erfolgen könnte, kann ein Verfahren zur Bestimmung der relativen Entropie der einzelnen empirischen Verteilungen genutzt werden.

Die benötigten Verteilungen werden anschließend einzeln von der zweiten Datenverarbeitungsanlage 80 durch Vorselektion der im einheitlichen Speicherformat vorliegenden Ablaufdaten und Anwendung einer zwei-stufigen Kerndichteschätzung zur Extrapolation erzeugt. Die zweite Datenverarbeitungsanlage 80 speichert die erzeugten Daten dann in der mit ihr gekoppelten Speichereinrichtung 40. Falls Manipulationen der Verteilungen definiert sind, so werden sie im Rahmen dieser Verarbeitung durch die zweite Datenverarbeitungsanlage 80 auf die jeweiligen empirischen Verteilungen angewendet. Sind keine Manipulationen konfiguriert, so wird vollständig das im Quellsystem aufgezeichnete Verhalten durch das Simulationsmodell nachgebildet.

Sobald die zweite Datenverarbeitungsanlage 80 die Bereitstellung der empirischen Verteilungen abgeschlossen hat und diese in ihrer Speichereinrichtung abgelegt hat, kann ein System zur Ausführung diskreter Simulationen darauf zugreifen und die Simulation auf Basis der in der Speichereinrichtung hinterlegten Informationen ausführen.

Das System zur Ausführung diskreter Simulationen kann sich entweder auf der zweiten Datenverarbeitungsanlage 80 befinden oder alternativ auch auf einer anderen Servereinrichtung befinden, welche mit einem Kommunikationsnetzwerk mit der Datenverarbeitungsanlage 80 gekoppelt ist.

Das gesamte Verfahren wird dabei jedes Mal erneut angestoßen, wenn das Simulationsmodell ausgeführt werden soll. Dadurch wird insbesondere gewährleistet, dass die Simulation stets mit aktuellen Daten durchgeführt wird. Zur Reduzierung der übertragenen Datenmenge und der benötigten Rechenleistungen können dabei auch nur inkrementelle Differenzen in den Ablaufdaten oder zeitlich bzw. inhaltlich beschränkte Bereiche der Ablaufdaten erneut extrahiert, anonymisiert, aufbereitet, übertragen und verarbeitet werden.

Ein weiteres Beispiel ist die Simulation eines Verkehrs- und Transportsystems, in welchem das Verhalten der im System befindlichen Verkehrsmittel durch fest-installierte Sensoren (z.B. an Ampeln oder Ladebrücken) sowie Sensoren in den Fahrzeugen erfasst wird und in regelmäßigen Zeitintervallen an eine zentrale Datenbank übermittelt wird. Das statische Simulationsmodell bildet daher in diesem Beispiel die folgenden technischen Einrichtungen ab:
- Workitems: Die im System befindlichen Verkehrsmittel (z.B. Autos oder Lastkraftwagen).
- Workcenter: Fest-installierte Einrichtungen, wie beispielsweise Ampeln, Entladestationen oder Tankstellen, welche von den Verkehrsmitteln durchlaufen werden.
- Warteschlangen: Beispielsweise Zufahrten zu Workcentern, wie beispielsweise einer Entladestation.
- Verbindungen: Die im System verfügbaren Verkehrswege, welche die Generatoren, Warteschlagen, Workcenter und Senken miteinander verbinden.
- Generatoren: Zufahrten über die neue Verkehrsmittel in das System eintreten werden als Generatoren abgebildet.
- Senken: Abfahrten über die Verkehrsmittel das System verlassen werden als Senken abgebildet.

In diesem weiteren Beispiel sind eine oder mehrere Servereinrichtungen, auf denen die Sensordaten gesammelt werden, vorhanden. Diese Servereinrichtungen sind ist über ein Kommunikationsnetzwerk mit einer Datenverarbeitungsanlage zur Ausführung des Verfahrens gekoppelt. Die Servereinrichtungen verfügen über eine Speichereinrichtung, etwa eine Datenbank. Die Speichereinrichtung kann sich alternativ auch auf einer anderen Servereinrichtung befinden, welche mit einem Kommunikationsnetzwerk mit der Servereinrichtung gekoppelt ist. Diese

Datenverarbeitungsanlage kann, wie im vorherigen Beispiel, nur einen Teil der Verarbeitung übernehmen oder das gesamte Verfahren ausführen.

Zur Erstellung, Aktualisierung und Konfiguration des Simulationsmodells nutzt die Datenverarbeitungsanlage den Zugriff auf die von den Sensoren aufgezeichneten Ablaufdaten, um diese zu extrahieren und dann Methoden zur Anonymisierung anzuwenden. Anschließend werden diese aufbereitet und in ein einheitliches Speicherformat überführt. Diese in einem einheitlichen Speicherformat aufbereiteten Ablaufdaten werden anschließend in eine weiteren Speichereinrichtung (z.B. eine Datenbank), welche sich auf dieser Datenverarbeitungsanlage befinden kann oder welche sich alternativ auf einer weiteren Servereinrichtung befinden kann, die mit dieser Datenverarbeitungsanlage über ein lokales Kommunikationsnetzwerk gekoppelt ist, übertragen.

Anschließend werden die im einheitlichen Speicherformat vorliegenden Ablaufdaten zur Erstellung eines Simulationsmodells des zu Grunde liegenden Verkehrssystems verwendet. Hierzu wird als erstes der Workflow-Graph, welcher die oben beschrieben Modellelemente und Verbindungen umfasst, bestimmt. Dieser Workflow-Graph wird anschließend in der gekoppelten Speichereinrichtung abgelegt.

Im Anschluss wird der Workflow-Graph, welcher das statische Simulationsmodell (d.h. die Verkehrswege und technischen Einrichtungen im zu simulierenden System) abbildet, genutzt um die empirischen Verteilungen für die Konfiguration der Modellelemente zu bestimmen. Hier beispielsweise:
- Zwischenankunftszeiten von neuen Verkehrsmitteln an den Zufahrten,
- Bearbeitungszeiten von Entladestationen,
- Weiterleitungshäufigkeiten an Schnittpunkten von Verkehrswegen, Schichtpläne für die Besetzung von Entladestationen.

Die benötigten Verteilungen werden anschließend einzeln durch Vorselektion der im einheitlichen Speicherformat vorliegenden Ablaufdaten und Anwendung einer zwei-stufigen Kerndichteschätzung zur Extrapolation erzeugt und in einer Speichereinrichtung abgelegt. In diesem Schritt können auch vorkonfigurierte Manipulationsoperationen, beispielsweise zur Simulation eines zu planenden Szenarios, angewendet werden. Beispielsweise könnten die Zwischenankunftszeiten an den Generatoren für die Zufahrtsstraßen um 20% verkürzt werden um ein erhöhtes Verkehrsaufkommen abzubilden.

Auf Basis des gespeicherten statischen Simulationsmodells und der empirischen Verteilungen kann dann die Simulation des Verkehrssystems ausgeführt werden.

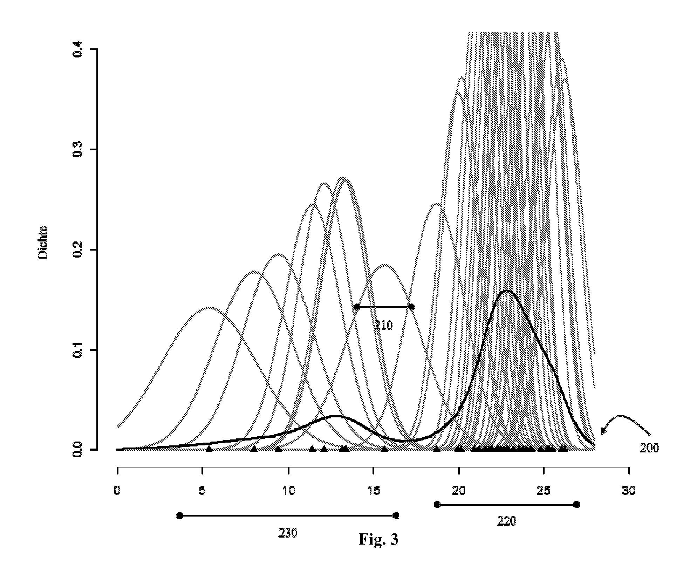

**Fig. 3** zeigt ein Diagramm, welches anhand eines Beispiels die sequentielle Anwendung einer Kerndichteschätzung mit globaler Bandbreite und anschließend mit lokaler Bandbreite illustriert.

Die grundlegende Idee der Kerndichteschätzung ist, eine empirische Verteilung durch eine Mischung von besonderen Verteilungen (Versuche haben ergeben, dass sich beispielsweise die Normalverteilung sehr gut eignet) zu "stetisieren". Dabei wird über alle Datenpunkte iteriert und es wird um jeden Datenpunkt eine symmetrische Verteilung gelegt (beispielsweise eine Normalverteilung), deren Erwartungswert genau dieser Datenpunkt ist. Die Kerndichteschätzung für die Verteilungsfunktion ist dann das Mittel dieser Verteilungen.

Dieses Verfahren ist in Fig. 3 beispielhaft dargestellt. Um jeden Datenpunkt (schwarze Dreiecke auf der x-Achse) wird eine Normalverteilung gelegt (graue Kurven). Die schwarze Kurve 200 ist die mittels Kerndichteschätzung ermittelte Dichte, d.h., das gewichtete Mittel der grauen Normalverteilungen.

Die besondere Herausforderung bei der Kerndichteschätzung ist die Wahl einer passenden Bandweite 210, der Varianz der im Beispiel grauen Normalverteilungen. Wird eine zu große Bandweite 210 gewählt, so tritt ein sogenanntes "oversmoothing" auf, d.h., die empirische Verteilung wird so stark geglättet, dass von der Aussage der Daten nichts mehr übrig bleibt. Wird hingegen eine zu kleine Bandweite 210 gewählt, so tritt "undersmoothing" auf. Das bedeutet, dass die Verteilung zu stark an die Daten angepasst ist (zu große Datentreue und damit keine generalisierten Aussagen möglich) und somit keine Glättung vorgenommen wird. Dann ist die Kerndichteschätzung schlicht wirkungslos.

Bei der Wahl der Bandweite 210 kann entweder eine lokale oder eine globale Bandweite verwendet werden. Bei der Verwendung lokaler Bandweiten wird die Varianz des zu einem Datenpunkt zugehörigen Verteilungskerns daran angepasst, wie viele weitere Datenpunkte in unmittelbarer Nähe des Datenpunktes liegen. Versuche haben gezeigt, dass in hoch frequentierten Bereichen kleine Bandweiten und in niedrig frequentierten Bereichen große Bandweiten gewählt werden sollten, da in Bereichen mit wenigen Datenpunkten leicht "oversmootht" wird und umgekehrt. Dies ist im Gegensatz zur Wahl einer globalen Bandweite besonders dann sinnvoll, wenn die Daten nicht gleichmäßig verteilt sind.

Zur Lösung dieser Herausforderung wird im Rahmen des erfindungsgemäßen Verfahrens eine zweistufige Kerndichteschätzung angewendet. Dabei wird zunächst eine Kerndichteschätzung mit einer vorbestimmten globalen Bandweite durchgeführt und dann auf Basis der Dichte dieser Kerndichteschätzung die lokalen Bandweiten berechnet. Die initiale Schätzung mit globaler Bandweite legt damit automatisch fest, welche Bereiche "hoch" (220) und welche "niedrig" (230) frequentiert sind. Das ist die Grundlage für die Berechnung der lokalen Bandweiten, mit denen eine zweite, endgültige Kerndichteschätzung für die jeweilige Verteilung durchgeführt wird. In zahlreichen Praxistests hat sich dieses Extrapolationsverfahren als sehr wirkungsvoll und robust erwiesen.

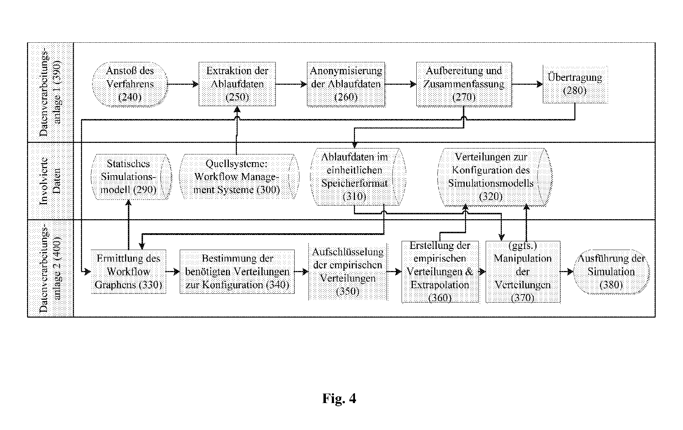

**Fig. 4** zeigt ein Ablaufdiagramm das den sequentiellen Ablauf des erfindungsgemäßen Verfahrens auf den beteiligten Datenverarbeitungsanlagen verdeutlicht.

Nach dem externen Anstoß des Verfahrens 240 (beispielsweise durch die Datenverarbeitungsanlage welche die Simulation ausführen möchte) führt die erste Datenverarbeitungsanlage 390 (das kann die erste Datenverarbeitungsanlage 70 aus Fig. 1 sein) die Extraktion der Ablaufdaten 250 aus den Workflow Management Systemen 300, welche das Verhalten des zu simulierenden Systems abbilden und elektronisch messen, durch.

Anschließend werden diese Messwerte über den Ablauf der Workflows durch das Entfernen bzw. Ersetzen personenbezogener Merkmale bereinigt 260. Hierbei können aus Datenschutzgründen etwa die identifizierten Organisationseinheiten soweit zusammengefasst werden, dass kein Rückschluss auf einzelnen beteiligten Personen möglich ist.

Die erste Datenverarbeitungsanlage 390 überführt dann die Ablaufdaten in ein einheitliches - Quellsystem-unabhängiges - Speicherformat 310. Diese im einheitlichen Speicherformat vorliegenden Daten 310 werden anschließend (idealerweise verschlüsselt) über ein Kommunikationsnetzwerk an die zweite Datenverarbeitungsanlage 400 (das kann die zweite Datenverarbeitungsanlage 80 aus Fig. 1 sein) übertragen bzw. dieser durch den Zugriff auf die relevante Speichereinrichtung (über das Kommunikationsnetzwerk) zugänglich gemacht.

Die zweite Datenverarbeitungsanlage 400 setzt das Verfahren durch die Ermittlung des WorkflowGraphens 330, aus welchem das statische Simulationsmodell 290 bestimmt wird, auf Basis der übertragenen Ablaufdaten 310 fort. Das ermittelte statische Simulationsmodell 290, ggfs. angepasst durch vorkonfigurierte Regeln, wird anschließend in einer lokal mit der zweiten Datenverarbeitungsanlage 400 gekoppelten Datenbank abgelegt.

Auf Basis des statistischen Simulationsmodells 290 ermittelt anschließend die zweite Datenverarbeitungsanlage 400 durch weitere Anwendung des Verfahrens die benötigten Informationen (d.h. empirische Verteilungen) zur Konfiguration der Modellelemente der Simulation 340.

Im nächsten Schritt wendet die zweite Datenverarbeitungsanlage 400 Verfahren zur Bestimmung der relativen Entropie 350 an, um zu bestimmen, ob und auf Basis welcher weiteren Eigenschaften der Ablaufdaten 310 eine weitere Aufschlüsselung der empirischen Verteilungen zu einer realistischeren Abbildung des simulierten Systems beitragen könnte. Beispielsweise könnten die zur Konfiguration eines Workcenters verwendeten Bearbeitungszeiten nicht durch nur eine empirische Verteilung abgebildet werden, sondern anhand weiterer Kriterien der bearbeiteten Workitems (z.B. die zusätzliche Eigenschaft "Problemkategorie") 15 genauer aufgeschlüsselte empirische Verteilungen verwendet werden..

Anschließend werden die benötigen Verteilungen 320 zur Konfiguration der Modellelemente durch Zugriff und Vorselektion der im einheitlichen Speicherformat vorliegenden Ablaufdaten 310 ermittelt. Hierzu werden für jede benötigte Verteilung die empirischen Ausprägungen geladen und ggfs. mittels einer zwei-stufigen Kerndichteschätzung extrapoliert 360. Die ermittelten empirischen Verteilungen werden anschließend in einer lokal mit der zweiten Datenverarbeitungsanlage 400 gekoppelten Datenbank abgelegt.

Als letzter Schritt werden die vordefinierten Manipulationsoperationen durch die zweite Datenverarbeitungsanlage 400 auf die in der Datenbank abgelegten empirischen Verteilungen angewendet 370. Für jede Manipulationsoperation wird dabei definiert, welchen Teil der Daten 310 sie betrifft und wie diese genau manipuliert werden sollen.

Auf Basis des durch das Verfahren ermittelten statischen Simulationsmodells 290 und der empirischen Verteilungen zur Konfiguration der Modellelemente 320 kann anschließend eine diskrete Simulation auf der zweiten Datenverarbeitungsanlage 400, oder alternativ auf einer anderen Datenverarbeitungsanlage, ausgeführt werden.

Nachfolgende Tabelle 1 zeigt beispielhafte Ablaufdaten im einheitlichen, aufbereiten Speicherformat wie sie von dem erfindungsgemäßen Verfahren zur automatischen Erstellung und Konfiguration von diskreten Simulationsmodellen genutzt werden können.

| **Nr.** | **Bezeichnung der Tätigkeit** | **Bearbeitende Organisationseinheit** | **Empfangen von Organisationseinheit** | **Weitergeleitet an Organisationseinheit** |
|---|---|---|---|---|
| 1 | Behebung Login Problem | Helpdesk Gruppe 3 | leer | leer |
| 2 | Anfrage zu offenem Incident | Helpdesk Gruppe 2 | leer | 1st Level 4 |
| 3 | Bereitstellung neuer PC-Arbeitsplatz | 1st Level 4 | Helpdesk Gruppe 2 | leer |
| 4 | Beratung zu E-Mail Problem | Helpdesk Gruppe 2 | leer | 1st Level Gruppe 1 |
| 5 | Behebung E-Mail Problem | 1st Level Gruppe 1 | Helpdesk Gruppe 2 | 2nd Level Gruppe 2 |
| 6 | Behebung E-Mail Problem | 2nd Level Gruppe 2 | 1st Level Gruppe 1 | 1st Level Gruppe 1 |
| 7 | Benachrichtigung Anwender | 1st Level Gruppe 1 | 2nd Level Gruppe 2 | leer |

**(nach rechts fortgesetzte Spalten der Tabelle 1)**

| **Nr.** | **Empfangszeitpunkt** | **Weiterleitungszeitpunkt** | **Bearbeitungszeit** | **Verarbeitete Workitems** |
|---|---|---|---|---|
| 1 | 12.06.2011 16:50:00 | leer | 1230 Sek. | leer |
| 2 | 13.06.2011 14:10:00 | 13.06.2011 14:20:00 | 500 Sek. | leer |
| 3 | 13.06.2011 14:20:00 | leer | 7340 Sek. | Task #0112390, Task #12839 |
| 4 | 12.06.2011 11:50:00 | 12.06.2011 14:10:00 | 340 Sek. | |
| 5 | 12.06.2011 14:10:00 | 13.06.2011 14:20:00 | 10240 Sek. | Task #0123897 |
| 6 | 13.06.2011 14:20:00 | 13.06.2011 16:30:00 | 900 Sek. | leer |
| 7 | 13.06.2011 16:30:00 | leer | 185 Sek. | leer |

Die abgebildete Tabelle 1 zeigt das einheitliche Speicherformat für die aus den Workflow Management Systemen extrahierten, anonymisierten Ablaufdaten, welches für das erfindungsgemäße Verfahren verwendet wird. Es ist dabei vorteilhaft zum Zwecke der Anonymisierung bereits in diesem Format alle personenbezogenen Daten (z.B. Namen von Anwendern in der Bezeichnung der Tätigkeit) zu entfernen oder durch Pseudonyme zu ersetzen. Weiterhin hat es sich als vorteilhaft erwiesen Organisationseinheiten so zusammenzufassen, dass kein Rückschluss auf einzelne Personen möglich ist.

Zusätzlich zu den abgebildeten Spalten können weitere Eigenschaften (z.B. betroffene Produkte oder Klassifikationen der bearbeiteten Workflows) der bearbeiteten Workitems gespeichert werden, um eine realistische Abbildung des simulierten Systems zu ermöglichen (insb. als Eingabewerte für die oben beschriebenen Verfahren zur Bestimmung der relativen Entropie einzelner Verteilungen, welche eine zusätzlich Aufschlüsselung der empirischen Verteilungen auf Basis dieser weiteren Eigenschaften ermöglichen). Diese weiteren Eigenschaften können dabei zu weiteren Aufschlüsselung der Verteilungen verwendet werden.

### Bezugszeichenliste

- 10: Datenbank 1
- 20: Datenbank 2
- 30: Datenbank 3
- 40: Datenbank 4
- 50: CRM System
- 60: Telefonanlage
- 70: Datenverarbeitungsanlage 1
- 80: Datenverarbeitungsanlage 2
- 90: Lokales Netzwerk 1
- 100: Lokales Netzwerk 2
- 110: Internetverbindung
- 120: Datenverarbeitungsanlage zur Ausführung der diskreten Simulation
- 130: Workitem Generator "EinPlatte"
- 140: Workitem Generator "EinBeine"
- 150: Warteschlange "EingangPlatte"
- 160: Warteschlange "EingangBeine"
- 170: Workcenter "Montagestation"
- 180: Warteschlange "AusgangTisch"
- 190: Senke "Aus Tisch"
- 200: Ermittelte Dichte der Extrapolation
- 210: Bandbreite einer Kerndichteschätzung
- 220: Hoch frequentierter Bereich
- 230: Niedrig frequentierter Bereich
- 240: Startereignis: Anstoß des Verfahrens
- 250: Ablaufschritt: Extraktion der Ablaufdaten
- 260: Ablaufschritt: Anonymisierung der Ablaufdaten
- 270: Ablaufschritt: Aufbereitung und Zusammenfassung
- 280: Ablaufschritt: Übertragung
- 290: Daten: Statistisches Simulationsmodell
- 300: Daten: Quellsysteme: Workflow Management Systeme
- 310: Daten: Statistisches Simulationsmodell
- 320: Daten: Ablaufdaten im einheitlichen Speicherformat
- 330: Daten: Verteilungen zur Konfiguration des Simulationsmodells
- 340: Ablaufschritt: Ermittlung des Workflow Graphens
- 350: Ablaufschritt: Bestimmung der benötigten Verteilungen zur Konfiguration
- 360: Ablaufschritt: Aufschlüsselung der empirischen Verteilungen
- 370: Ablaufschritt: Manipulation von Verteilungen
- 380: Endereignis: Aufschlüsselung der empirischen Verteilungen
- 390: Datenverarbeitungsanlage 1
- 400: Datenverarbeitungsanlage 2

## Patentansprüche

1. Computer-implementiertes Verfahren zum Erstellen, Konfigurieren und Aktualisieren eines Simulationsmodells, insbesondere eines diskreten Simulationsmodells, für ein zu simulierendes System in einer Datenverarbeitungsanlage, wobei das Simulationsmodell zumindest ein Arbeitselement und zumindest ein Bearbeitungselement, welches das zumindest eine Arbeitselement verarbeitet, umfasst, wobei das Verfahren zumindest umfasst:
- Entgegennehmen von Daten, welche eine Anzahl von Eigenschaften des zu simulierenden Systems beschreiben;
- Ermitteln eines Workflow-Graphen, welcher die Elemente eines statischen Simulationsmodells beschreibt; und
- Konfigurieren der Elemente des statischen Simulationsmodells, wobei das Konfigurieren ein Ermitteln von empirischen Verteilungen der Daten umfasst.

2. Verfahren nach Anspruch 1, wobei das Ermitteln des Workflow-Graphen
- ein Erzeugen des Workflow-Graphen durch Auswerten der Daten, oder
- ein Laden eines bereits bestehenden Workflow-Graphen umfasst.

3. Verfahren nach Anspruch 1 oder 2, wobei die empirischen Verteilungen der Daten mittels einer Kerndichteschätzung extrapoliert werden.

4. Verfahren nach Anspruch 3, wobei die Kerndichteschätzung eine zweistufige Kerndichteschätzung umfasst, wobei
- in einem ersten Schritt eine Kerndichteschätzung mit einer globalen Bandbreite, und
- in einem zweiten Schritt Kerndichteschätzungen mit zumindest einer lokalen Bandbreite
durchgeführt werden, wobei die zumindest eine lokale Bandbreite in dem zweiten Schritt in Abhängigkeit von der Verteilungsfunktion der Kerndichteschätzung in dem ersten Schritt gewählt wird.

5. Verfahren nach einem der vorhergehenden Ansprüche, wobei vor dem Erzeugen des Simulationsmodells die Daten aufbereitet werden, wobei das Aufbereiten der Daten zumindest eines aus Beheben von Datenfehlern und Abbilden der Daten auf ein vorbestimmtes Datenformat umfasst, und wobei die entgegengenommenen Daten kryptographisch verschlüsselt und/oder anonymisiert sind.

6. Verfahren nach einem der vorhergehenden Ansprüche, wobei die empirischen Verteilungen der Daten vor dem Konfigurieren der Elemente des Simulationsmodells aufbereitet und / oder angepasst und / oder verändert werden.

7. Verfahren nach einem der vorhergehenden Ansprüche, wobei vor dem Entgegennehmen der Daten, die Daten aufgezeichnet werden und in einer Speichereinrichtung, vorzugesweise eine Datenbank, gespeichert werden, wobei die Speichereinrichtung operativ mit der Datenverarbeitungsanlage, vorzugsweise über ein Kommunikationsnetzwerk, koppelbar ist.

8. Verfahren nach einem der vorhergehenden Ansprüche, wobei das Erzeugen des Workflow-Graphen bzw. das Auswerten der Daten zum Erzeugen des Workflow-Graphen umfasst:
- Zusammenfassen der entgegengenommenen und vorzugsweise in ein vorbestimmtes Datenformat überführten Daten, wobei die zusammengefassten Daten eine Anzahl von Datenelemente umfasst, welche jeweils einen Arbeitsschritt des zu simulierenden System beschreiben;
- für jedes Datenelement, überprüfen, ob das Datenelement bereits in dem Workflow-Graphen enthalten ist, und, sofern das Datenelement in dem Workflow-Graphen nicht enthalten ist, erzeugen von dem Datenelement entsprechenden Modellelemente und einfügen der Modellelemente in den Workflow-Graphen.

9. Verfahren nach einem der vorhergehenden Ansprüche, wobei nach dem Erzeugen des Workflow-Graphen dieser gemäß einer Anzahl vorbestimmter Regeln angepasst wird.

10. Verfahren nach einem der vorhergehenden Ansprüche, wobei ein Aktualisieren des ermittelten Workflow-Graphen durchgeführt wird, wenn die entgegengenommenen Daten eine Änderung des zu simulierenden Systems signalisieren.

11. Verfahren nach einem der vorhergehenden Ansprüche, wobei die Daten Sensordaten umfassen, welche von dem zu simulierenden System bereitgestellt werden.

12. Datenverarbeitungseinrichtung zum Erstellen, Konfigurieren und Aktualisieren eines Simulationsmodells, insbesondere eines diskreten Simulationsmodells, für ein zu simulierendes System, wobei das Simulationsmodell zumindest ein Arbeitselement (Workitem) und zumindest ein Bearbeitungselement (Workcenter), welches das zumindest eine Arbeitselement verarbeitet, umfasst, wobei die Datenverarbeitungseinrichtung angepasst ist:
- Daten, welche eine Anzahl von Eigenschaften des zu simulierenden Systems beschreiben, entgegenzunehmen;
- einen Workflow-Graphen, welcher die Elemente eines statischen Simulationsmodells beschreibt, zu ermitteln, wobei das Ermitteln insbesondere ein Erstellen eines Workflow-Graphen, durch Auswerten der Daten umfasst; und
- die Elemente des statischen Simulationsmodells zu konfigurieren, wobei das Konfigurieren ein Ermitteln von empirischen Verteilungen der Daten umfasst.

13. Datenverarbeitungseinrichtung nach Anspruch 12, welche ferner angepasst ist beim Erzeugen des Workflow-Graphen
- entgegengenommene und vorzugsweise in ein vorbestimmtes Datenformat überführte Daten zusammenzufassen, wobei die zusammengefassten Daten eine Anzahl von Datenelemente umfasst, welche jeweils einen Arbeitsschritt des zu simulierenden System beschreiben;
- für jedes Datenelement zu überprüfen, ob das Datenelement bereits in dem Workflow-Graphen enthalten ist, und, sofern das Datenelement in dem Workflow-Graphen nicht enthalten ist, dem Datenelement entsprechenden Modellelemente zu erzeugen und die erzeugten Modellelemente in den Workflow-Graphen einzufügen.

14. Datenverarbeitungseinrichtung nach Anspruch 12 oder 13, wobei die Datenverarbeitungseinrichtung mit zumindest einer Speichereinrichtung, vorzugesweise eine Datenbank, operativ, vorzugsweise über ein Kommunikationsnetzwerk, koppelbar ist, wobei in der Speichereinrichtung die Daten aufgezeichnet sind, wobei die entgegengenommenen Daten von einer weiteren Datenverarbeitungseinrichtung bereitgestellt und gegebenenfalls aufbereitet werden.

15. Datenverarbeitungseinrichtung nach einem der Ansprüche 12 bis 14, wobei die Daten Sensordaten umfassen, welche von dem zu simulierenden System bereitgestellt werden und welche über eine Schnittstelle der Datenverarbeitungseinrichtung zur Verfügung gestellt werden, und /oder wobei die Daten ein Änderungssignal umfassen, mit welchem der Datenverarbeitungseinrichtung eine Änderung in dem zu simulierenden Systems signalisierbar ist, wobei die Datenverarbeitungseinrichtung angepasst ist, ein Aktualisieren eines bereits erzeugten Simulationsmodells durchzuführen, wenn das Änderungssignal eine Änderung des zu simulierenden Systems signalisiert.
